# EUROPEAN PATENT APPLICATION

(11) **EP 2 023 033 A1**
(43) Date of publication of application: **11.02.2009**
(21) Application number: 07015453.9
(22) Date of filing: 07.08.2007
(51) Int. Cl.: F21L 4/04, F21L 4/08, F21S 9/02, H02J 9/06

(54) **Low power consuption LED emergency light**

(71) Applicant: King Sound Enterprises Co Ltd, Chien Chen District Kaohsiung (TW)
(72) Inventor: Lin, Hui-Nan, Kaohsiung (TW)
(74) Representative: Haft, von Puttkamer, Berngruber

(57) **Abstract**

The present invention is to provide an emergency light comprising a housing (1), a matrix shaped LED light module (20), a charging module (320), and a power cord (32) having one end extending out of the housing for connecting to an AC source and the other end electrically connected to the charging module and the matrix shaped LED light module respectively. Power of the AC source is either fed to the charging module for charging the charging module via the power cord or fed to the matrix shaped LED light module for illuminating a predetermined area with high-intensity light. Due to the low power consumption characteristic of the matrix shaped LED light module, the emergency light has the ability of consuming a minimum amount of energy in illumination and prolonging the time period of illumination while no electrical current is supplied to the emergency light.

## Description

### FIELD OF THE INVENTION

The invention relates to emergency lighting devices, and more particularly to such an emergency light equipped with a matrix shaped LED light module for receiving power from a charging module or a power cord, so as to consume a minimum amount of energy in illumination and prolong the time period of illumination.

### BACKGROUND OF THE INVENTION

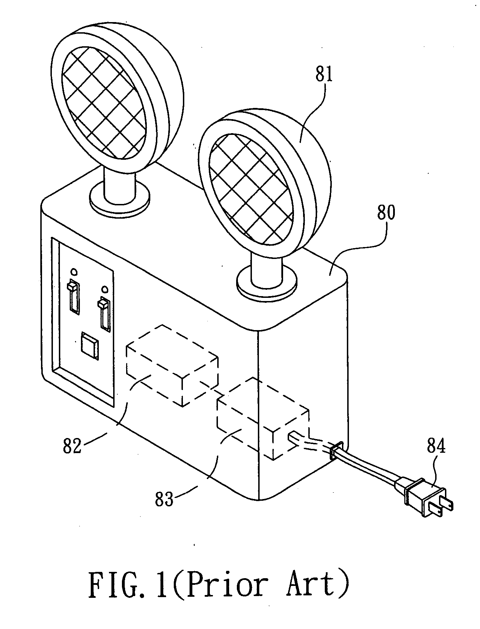

A conventional emergency light is shown in FIG. 1 and comprises a parallelepiped housing 80 having two spaced conventional light sources 81, which are projecting above the housing 80 and mainly be incandescent light bulbs or fluorescent bulbs; a rechargeable battery 82 installed in the housing 80; a control circuit 83 installed in the housing 80; and an external plug 84 at an end of a power cord (not numbered) installed in the housing 80, wherein the control circuit 83 is electrically connected to the light sources 81, the battery 82, and the plug 84 respectively. In response to inserting the plug 84 in, for example, a wall outlet, the control circuit 83 feeds electrical current supplied from an AC (alternating current) power to the battery 82 for charging the battery 82. To the contrary, in response to unplugging the plug 84 or no electrical current being detected by the control circuit 83, the light sources 81 are activated by furnishing electrical current thereto by the battery 82. As a result, the emergency light comes on automatically and illuminates a predetermined area until the electrical power stored in the battery 82 is completely consumed.

However, in order to improve the low illumination of the light sources 81, any method applied for increasing the intensity of light produced by the light sources 81 will inevitably cause the emergency light suffered from the disadvantage, that the power supplied from the battery 82 to the emergency light will be consumed quickly. It is typically that the emergency light will consume the electrical power stored in the battery 82 within one hour. When a building experiences a power outage or in the event of fire lasting for more than one hour, the emergency light will be unable to illuminate a predetermined area for those who living or working in the building after one hour's emergency lighting. Thus, it is desirable among manufacturers of the art to provide a more energy-efficient emergency light with high illumination and other beneficial advantages in order to overcome the inadequacy of the prior art.

### SUMMARY OF THE INVENTION

After considerable research and experimentation, a low power consumption LED emergency light according to the invention has been devised so as to overcome drawbacks relating to low illumination, poor heat dissipation, packing, and environment-friendly problems of the prior art.

It is an object of the invention to provide a low power consumption LED emergency light comprising a housing, a matrix shaped LED light module installed in the housing, a charging module, and a power cord having one end extending externally of the housing to be connect to an AC source and the other end electrically connected to the charging module and the matrix shaped LED light module respectively. Power of the AC source is either fed to the charging module for charging the charging module via the power cord or fed to the matrix shaped LED light module for illuminating a predetermined area with high-intensity light. Due to the low power consumption characteristic of the matrix shaped LED light module, the LED emergency light has the ability of consuming a minimum amount of energy in illumination and prolonging the time period of illumination while the plug of the LED emergency light is unplugged or no electrical current is supplied by the AC source.

It is another object of the invention to provide a low power consumption LED emergency light comprising a charging pedestal and a lamp body, wherein the charging pedestal comprises a power cord having one end adapted to connect to an AC source, and the lamp comprises a matrix shaped LED light module and a charging module and is releasably secured to the charging pedestal so as to be powered by electrical current of the charging pedestal supplied by the AC source. The matrix shaped LED light module comprises a frame, a substrate, and a transparent cover. The substrate is disposed on a bottom of the frame and includes a plurality of LEDs which are capable of emitting blue light. The transparent cover is disposed on a top of the frame and is formed of phosphorus. The phosphorus of the transparent cover can be activated when the LEDs emit blue light. As a result, a very bright light is rendered by the matrix shaped LED light modules. In addition, due to the low power consumption characteristic of the matrix shaped LED light module, the LED emergency light is capable of consuming only a minimum amount of energy in illumination and prolonging the time period of illumination while the plug of the LED emergency light is unplugged or no electrical current is supplied by the AC source..

The above and other objects, features and advantages of the invention will become apparent from the following detailed description taken with the accompanying drawings.

### BRIEF DESCRIPTION OF THE DRAWINGS

FIG. 1 is a perspective view of a conventional emergency light;
FIG. 2 is a perspective view of a first preferred embodiment of low power consumption LED emergency light according to the invention;
FIG. 3 is an exploded view of the emergency light of FIG. 2;
FIG. 4 is an electrical block diagram of the circuit board of FIG. 3;
FIG. 5 is an exploded perspective view of a second preferred embodiment of low power consumption LED emergency light according to the invention;
FIG. 6 is an electrical block diagram of the charging pedestal and the circuit board of FIG. 5;
FIG. 7 is an exploded perspective view of a third preferred embodiment of low power consumption LED emergency light according to the invention; and
FIG. 8 is a sectional view of the matrix shaped LED light module according to any preferred embodiment of the invention.

### DETAILED DESCRIPTION OF THE PREFERRED EMBODIMENTS

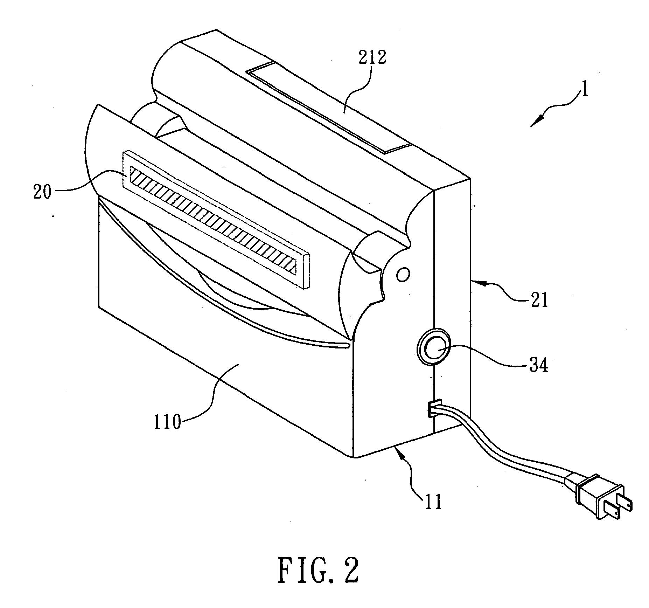

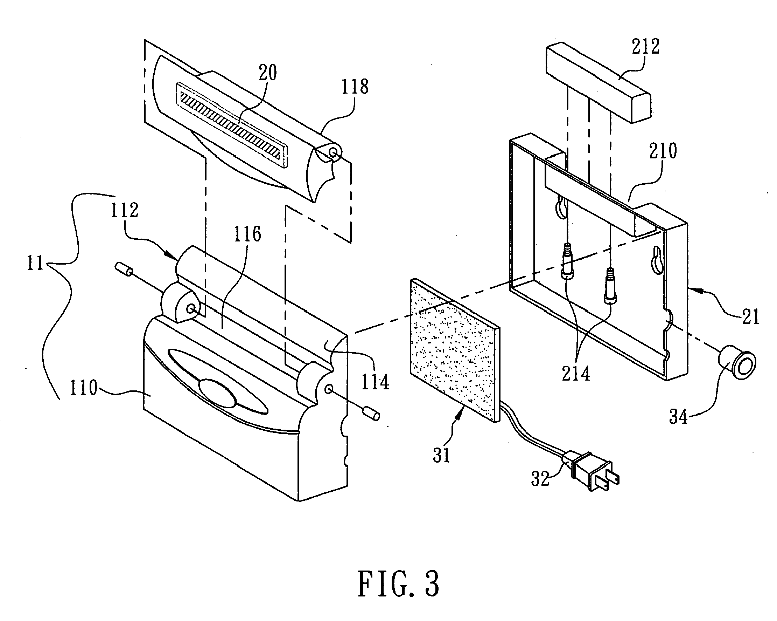

Referring to FIGS. 2 and 3, a low power consumption LED emergency light in accordance with a first preferred embodiment of the invention is shown. The emergency light comprises a housing 1 consisting of a first shell 11 and a mated second shell 21. The first shell 11 comprises a lower parallelepiped block 110 and an upper arcuate block 112 formed integrally with the parallelepiped block 110. The arcuate block 112 comprises on its front surface a curved surface 114. A lower recessed section 116 is disposed on the first shell 11 at a position between the upper arcuate block 112 and the lower parallelepiped block 110. A lamp 118 is pivotably secured between two sides of the recessed section 116 by means of pins (not numbered). A matrix shaped LED light module (i.e., light source) 20 is provided on a front surface of the lamp 118. The lamp 118 is adapted to pivot relative to the recessed section 116 for adjusting an illumination angle of the matrix shaped LED light module 20. The second shell 21 comprises a top bezel 210 and a handle 212 slidably provided in the bezel 210 by means of two support pins 214 driven through a bottom of the bezel 210 into the handle 212. Thus, a user may move the emergency light by pulling the handle 212 a predetermined distance out of the bezel 210 until the support pins 214 are stopped by the bottom of the bezel 210. In this position, the whole weight of the emergency light is supported by the support pins 214.

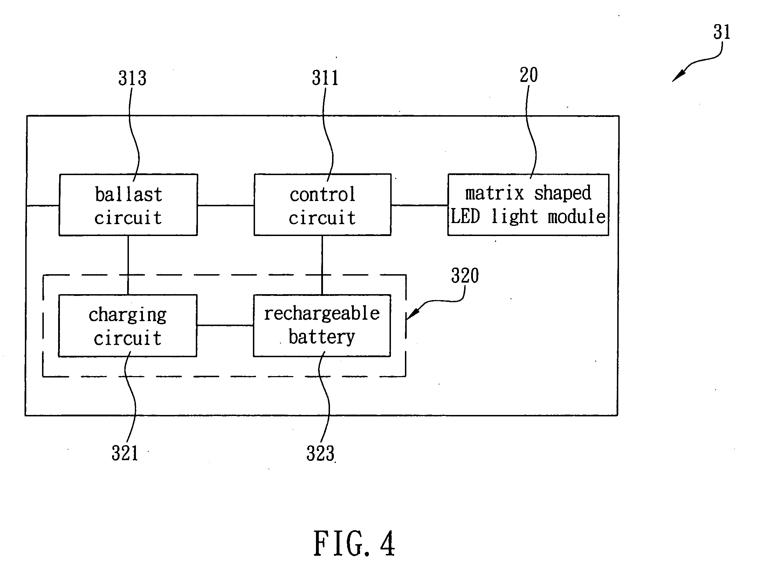

Referring to FIG. 4 in conjunction with FIG. 3, in the first preferred embodiment an internal space (not shown) in the housing 1 is formed after coupling the first and the second shells 11, 12 together. A circuit board 31 is provided in the internal space. On the circuit board 31, there are provided a charging module 320, a control circuit 311, a ballast circuit 313, and a power cord 32. The charging module 320 comprises a charging circuit 321 and a rechargeable battery 323. The charging circuit 321 is electrically connected to the rechargeable battery 323 and the ballast circuit 313 respectively. An on/off switch 34 is provided on one side of the housing 1 for being pressed by a user to enable/disable the control circuit 311. The control circuit 311 is electrically connected to the matrix shaped LED light module 20, the rechargeable battery 323 and the ballast circuit 313 respectively so as to establish the connection between the matrix shaped LED light module 20 and the rechargeable battery 323 or the connection between the matrix shaped LED light module 20 and the ballast circuit 313. One end of the power cord 32 extends externally of the housing 1 and is adapted to connect to an AC source (e.g., a wall outlet) and the other end thereof is electrically connected to the ballast circuit 313 for supplying AC power to the charging module 320 for charging the rechargeable battery 323 as a power source of the emergency light. The rechargeable battery 323 is adapted to supply power to the matrix shaped LED light module 20 for illuminating a predetermined area with high intensity of light when no electrical current is supplied by the AC source via the power cord 32 . By configuring as above, due to the low power consumption characteristic of the matrix shaped LED light module 20, the LED emergency light is capable of consuming a minimum amount of energy in illumination and prolonging the time period of illumination when the AC power is no more provided to the circuit board 31.

When the switch 34 is turned on and the emergency light is connected to the AC source (e.g., 220V 50Hz) via the power cord 32, the control circuit 311 is conducted to establish the connection between the ballast circuit 313 and the matrix shaped LED light module 20 and cut the connection between the rechargeable battery 323 and the matrix shaped LED light module 20 simultaneously. At this moment, the ballast circuit 313 converts AC power fed from the power source into power of a predetermined voltage for the emergency light by stepping down voltage, and then feeds the electrical current of the power of the predetermined voltage to the matrix shaped LED light module 20 through the control circuit 311 and to the charging circuit 321 respectively. The charging circuit 321 then feeds the received electrical current to the rechargeable battery 323 for charging the rechargeable battery 323, and will stop charging the rechargeable battery 323 after charging for a predetermined period of time (e.g., 8 hours in the embodiment). Alternatively, when the switch 34 is turned off and the emergency light isn't connected to the AC source via the power cord 32, the control circuit 311 will not receive the electrical current supplied from the wall outlet through the ballast circuit 313, and in turn establishes the connection between the rechargeable battery 323 and the matrix shaped LED light module 20. As a result, the rechargeable battery 323 will provide electrical power stored therein to the matrix shaped LED light module 20 via the control circuit 311 as to enable the matrix shaped LED light module 20 to illuminate the predetermined area.

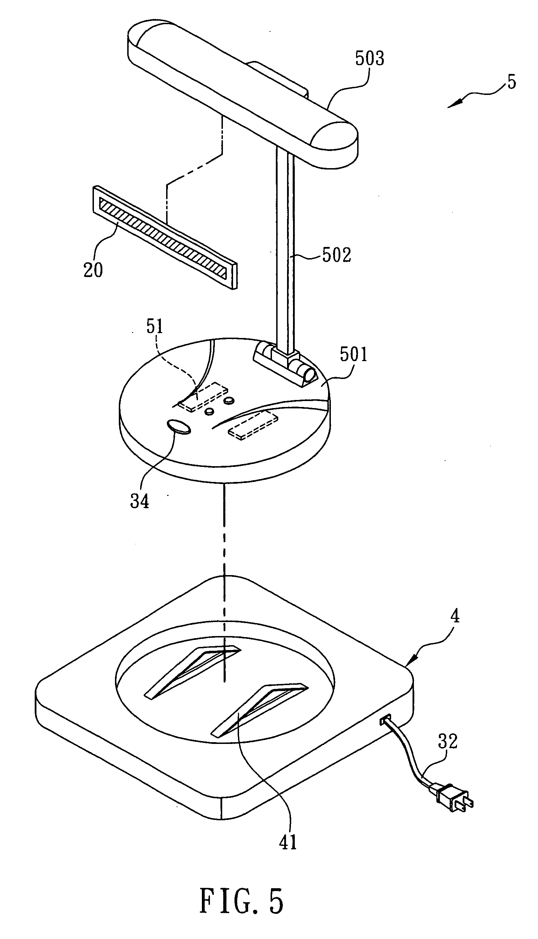

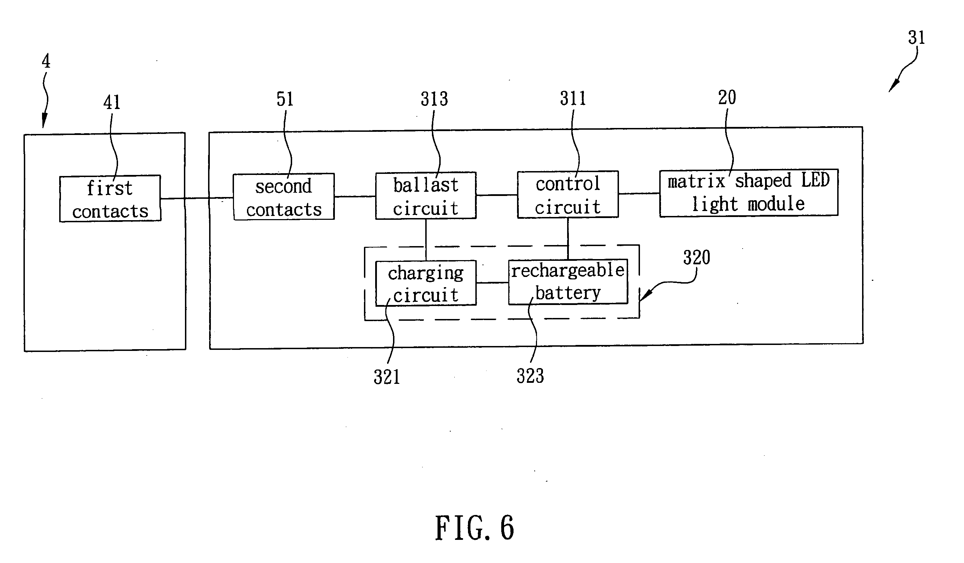

Conventionally, an emergency light is electrically connected to a wall outlet via a power cord. Thus, the conventional emergency light is confined by the length of the power cord and wiring, i.e., the emergency light is typically placed within a confined area. The emergency light is not visually aesthetic if the wiring is messy. Further, surrounding people tend to be tangled by the wire if sufficient care is not taken. Advantageously, the above drawbacks can be overcome by a low power consumption LED emergency light in accordance with a second preferred embodiment of the invention as shown in FIGS. 5 and 6. The characteristics of the second preferred embodiment are detailed below. The emergency light comprises a charging pedestal 4 and a separable lamp 5. The charging pedestal 4 comprises two first contacts 41 and a power cord 32 having one end adapted to connect to a wall outlet and the other end connected to the first contacts 41 in the charging pedestal 4. The lamp 5 is adapted to place on a circular recess on a top surface of the charging pedestal 4 in position. The lamp 5 comprises a circuit board 31, on which a matrix shaped LED light module 20, a charging module 320, a control circuit 311, a ballast circuit 313 and two second contacts 51 are electrically disposed, wherein the charging module 320 comprises a charging circuit 321 and a rechargeable battery 323. The charging circuit 321 is electrically connected to the rechargeable battery 323 and the ballast circuit 313 respectively. An on/off switch 34 is provided on the base of the lamp 5 for being pressed by a user to enable/disable the control circuit 311. The control circuit 311 is electrically connected to the matrix shaped LED light module 20, the rechargeable battery 323 and the ballast circuit 313 respectively so as to establish the connection between the matrix shaped LED light module 20 and the rechargeable battery 323 or the connection between the matrix shaped LED light module 20 and the ballast circuit 313. The ballast circuit 313 is electrically connected to the second contacts 51 which are partially exposed on the bottom of the lamp 5 for receiving and transmitting electrical power to the circuit board 31. When the base of the lamp 5 is placed on the top recess of the charging pedestal 4 and the switch 34 is turned off, the first contacts 41 and the second contacts 51 are electrically connected together, the control circuit 311 cuts the connection between the ballast circuit 313 and the matrix shaped LED light module 20, and the ballast circuit 313 converts AC power fed from the charging pedestal 4 into power of a predetermined voltage for the lamp 5 by stepping down voltage, and then feeds the power of the predetermined voltage to the rechargeable battery 323 via the charging circuit 321 for storage (i.e., charging). The charging circuit 321 will stop charging the rechargeable battery 323 after a predetermined period of time (e.g., 8 hours in the embodiment) of charging.

To the contrary, when the switch 34 is turned on, the control circuit 311 is conducted to establish the connection between the ballast circuit 313 and the matrix shaped LED light module 20 and cut the connection between the rechargeable battery 323 and the matrix shaped LED light module 20 simultaneously. In addition to charging the rechargeable battery 323 by the charging pedestal 4, the ballast circuit 313 converts AC power fed from the charging pedestal 4 into power of a predetermined voltage for the lamp 5 by stepping down voltage. The power is then fed to the matrix shaped LED light module 20 via the control circuit 311. As a result, the matrix shaped LED light module 20 illuminates a predetermined area with high intensity of light.

In an event the first and second contacts 41, 51 are disconnected when the lamp 5 is removed from the charging pedestal 4 and the switch 34 is turned on, the control circuit 311 will electrically interconnect the rechargeable battery 323 and the matrix shaped LED light module 20, and in turn enable the matrix shaped LED light module 20 to illuminate a predetermined area with high intensity of light as powered by the rechargeable battery 323. By configuring as above, a user can carry the lamp 5 to any desired place for lighting purpose without being limited by the length of the power cord 32 of the charging pedestal 4.

The lamp 5 is implemented as a cordless table lamp 5 as shown in FIG. 5. The table lamp 5 comprises a base 501, a column 502, and a light bulb 503. The column 502 has a top end connected to the light bulb 503 and a bottom end mounted on the base 501. The circuit board 31 is provided in the base 501. The matrix shaped LED light module 20 is provided in the light bulb 503. A user may place the base 501 of the table lamp 5 on the top recess of the charging pedestal 4 for charging or illumination purpose. Alternatively, the table lamp 5 can be placed on top of a table. It is envisaged by the invention that a user does not need to worry if the length of the power cord of the lamp is longer enough to reach a nearest wall outlet and does not need to worry if wiring is messy since the table lamp 5 is cordless.

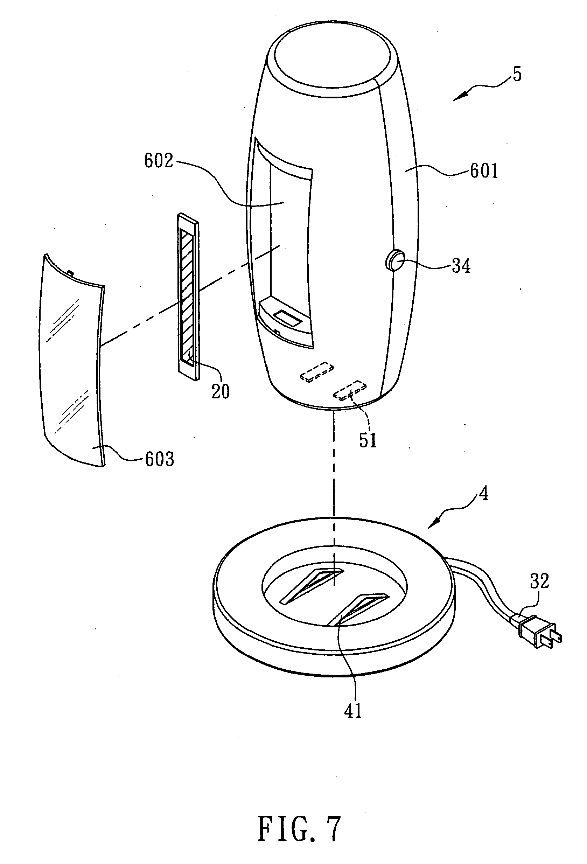

The lamp 5 is implemented as a cordless outdoor lamp 5 as shown in FIG. 7. The cordless outdoor lamp 5 is a third preferred embodiment of the invention. The cordless outdoor lamp 5 comprises a cylindrical housing 601 with a bulged central portion. The circuit board 31 is provided in the housing 601. The housing 601 has a rectangular cavity 602 on a peripheral surface. The matrix shaped LED light module 20 is adapted to fit in the cavity 602. A transparent cover 603 is dimensioned and shaped to fit snugly over the cavity 602. The cordless outdoor lamp 5 is made waterproof and thus is adapted to place on a charging pedestal 4 for charging or illumination purpose. Alternatively, the cordless outdoor lamp 5 can be placed on a desired outdoor position without considering whether there is power available or not. Also, there is no need to worry people may be tangled carelessly by the long power cord.

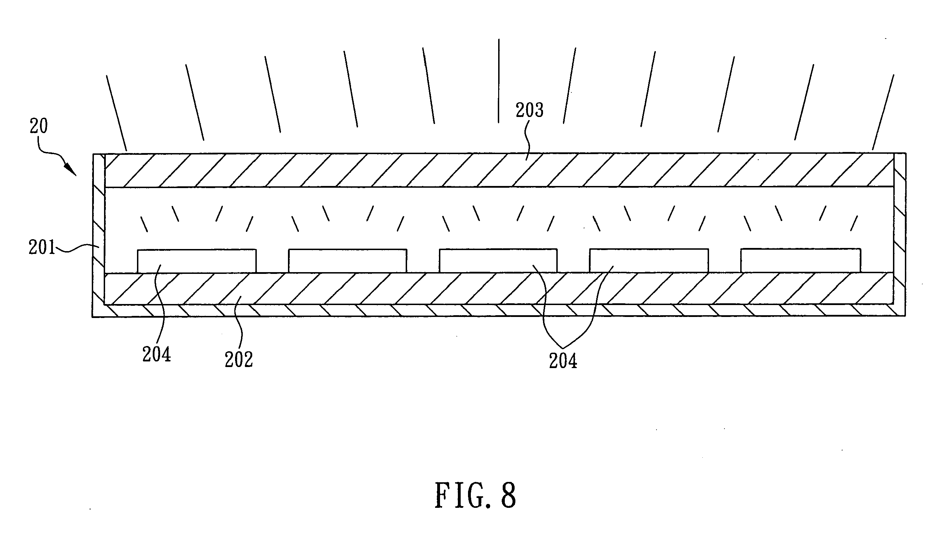

Referring to FIG. 8, in each of the above preferred embodiments of the invention the matrix shaped LED light module 20 is comprised of a frame 201, a substrate 202, and a transparent cover 203. The substrate 202 is provided on a bottom of the frame 201. A plurality of LEDs 204 are provided on the substrate 202. The LED 204 is adapted to emit blue light. The transparent cover 203 is provided on a top of the frame 201 and is formed of phosphorus. The phosphorus of the transparent cover 203 can be activated when the LEDs 204 emit blue light. As a result, a very bright light is rendered by the matrix shaped LED light modules 20. In addition to low power consumption and high illumination properties, the matrix shaped LED light modules 20 does not cause damage to the environment.

It is envisaged by the invention that the matrix shaped LED light module 20 not only can provide illumination of high intensity but also has many advantages including low power consumption, vibration resistant, compact, quick response time and being complied with the concept of environmental protection. For example, when an emergency light of the invention incorporating a rechargeable battery 323 of 12.5V, 240mA, and a maximum power of 3W, the emergency light can provide a prolonged illumination of about 6 hours. As compared with the conventional emergency light, the emergency light of the invention is without the drawbacks of low luminous flux, poor heat dissipation, and low performance.

While the invention herein disclosed has been described by means of specific embodiments, numerous modifications and variations could be made thereto by those skilled in the art without departing from the scope and spirit of the invention set forth in the claims.

## Claims

1. An emergency light adapted to consume a minimum amount of energy in illumination, comprising:
a housing;
a matrix shaped LED (light-emitting diode) light module in the housing; and
a power cord having one end extending externally out of the housing and electrically connected to an AC (alternating current) source, and the other end electrically connected to the matrix shaped LED light module for supplying electrical current thereto for illumination.

2. The emergency light of claim 1, wherein the housing comprises:
a first shell;
a cover pivotably secured on a front surface of the first shell and being adapted to receive the matrix shaped LED light module; and
a second shell secured to the first shell to form an internal space therebetween.

3. The emergency light of claim 2, wherein the first shell comprises:
a lower block;
an upper arcuate block formed integrally with the block and including a curved surface on its front surface;
a lower recessed section disposed at a position between the upper arcuate block and the lower parallelepiped block; and
a lamp pivotably secured between two sides of the recessed section.

4. The emergency light of claim 2, wherein the second shell comprises:
a top bezel;
two support pins fixedly mounted on a bottom of the bezel; and
a handle slidably secured to the support pins so as to slide relative to the bezel.

5. The emergency light of claim 2, further comprising in the internal space:
a circuit board electrically connected to the matrix shaped LED light module;
a ballast circuit disposed on the circuit board and being electrically connected to the other end of the power cord, the ballast circuit being adapted to change a voltage level of the AC source fed to the circuit board;
a charging module including a charging circuit and a rechargeable battery wherein the charging circuit is electrically connected to the rechargeable battery and the ballast circuit respectively, and is adapted to supply a current from the ballast circuit to the rechargeable battery for charging the rechargeable battery; and
a control circuit electrically connected to the matrix shaped LED light module, the rechargeable battery, and the ballast circuit respectively so as to establish a connection between the matrix shaped LED light module and the rechargeable battery or a connection between the matrix shaped LED light module and the ballast circuit.

6. The emergency light of claim 5, wherein the matrix shaped LED light module comprises:
a frame;
a substrate on a bottom of the frame and including a plurality of LEDs; and
a transparent cover on a top of the frame and being formed of phosphorus.

7. An emergency light adapted to consume a minimum amount of energy in illumination, comprising:
a charging pedestal including two first contacts and a power cord having one end adapted to connect to an AC (alternating current) source and the other end connected to the first contacts;
a lamp releasably mounted on the charging pedestal to be powered by electrical current of the charging pedestal supplied from the AC source; and
a matrix shaped LED (light-emitting diode) light module on the lamp, the matrix shaped LED light module being adapted to illuminate in response to being furnished with the electrical current of the charging pedestal supplied from the AC source, wherein the matrix shaped LED light module comprises a frame, a substrate on a bottom of the frame and including a plurality of LEDs, and a transparent cover on a top of the frame and being formed of phosphorus.

8. The emergency light of claim 7, wherein the lamp comprises:
a column;
a light bulb connected to a top end of the column and being adapted to receive the matrix shaped LED light module;
a base connected to a bottom end of the column; and
a circuit board in the base and comprising:
two second contacts electrically connected to the circuit board;
a ballast circuit electrically connected to the other end of the power cord, the ballast circuit being adapted to change a voltage level of the AC source fed to the circuit board;
a charging module including a charging circuit and a rechargeable battery wherein the charging circuit is electrically connected to the rechargeable battery and the ballast circuit respectively, and is adapted to supply a current from the ballast circuit to the rechargeable battery for charging the rechargeable battery; and
a control circuit electrically connected to the matrix shaped LED light module, the rechargeable battery, and the ballast circuit respectively so as to establish a connection between the matrix shaped LED light module and the rechargeable battery or a connection between the matrix shaped LED light module and the ballast circuit.

9. The emergency light of claim 7, wherein the lamp comprises:
a cylindrical housing including a peripheral cavity being adapted to receive the matrix shaped LED light module; and
a cover sealingly fitted on the cavity.

10. The emergency light of claim 9, further comprising a circuit board in the housing , the circuit board comprising:
two second contacts partially exposed on a bottom of the housing and being electrically connected to the circuit board;
a ballast circuit electrically connected to the second contacts, the ballast circuit being adapted to change a voltage level of the AC source fed to the circuit board;
a charging module including a charging circuit and a rechargeable battery wherein the charging circuit is electrically connected to the rechargeable battery and the ballast circuit respectively, and is adapted to supply a current from the ballast circuit to the rechargeable battery for charging the rechargeable battery; and
a control circuit electrically connected to the matrix shaped LED light module, the rechargeable battery, and the ballast circuit respectively so as to establish a connection between the matrix shaped LED light module and the rechargeable battery or a connection between the matrix shaped LED light module and the ballast circuit.
